# EUROPÄISCHE PATENTSCHRIFT

(11) **EP 1 517 950 B1**
(45) Veröffentlichungstag und Bekanntmachung des Hinweises auf die Patenterteilung: **04.08.2010**
(21) Anmeldenummer: 03761581.2
(22) Anmeldetag: 18.06.2003
(51) Int. Cl.: C08K 9/00, C08K 9/02, C09D 11/00, C09D 11/02, C08K 13/00, C08K 3/00, C08K 3/22, C08K 3/30, C09D 7/12, C09D 17/00

(54) **HÄRTUNG UND TROCKNUNG VON LACKSYSTEMEN UND DRUCKFARBEN**
HARDENING AND DRYING OF LACQUER SYSTEMS AND PRINTING COLORS
DURCISSEMENT ET SECHAGE DE COUCHES DE VERNIS ET D'ENCRES D'IMPRESSION DE COULEUR

(30) Priorität: 28.06.2002 DE 10229255; 12.02.2003 DE 10305963
(43) Veröffentlichungstag der Anmeldung: 30.03.2005
(73) Patentinhaber: Merck Patent GmbH, 64293 Darmstadt (DE)
(72) Erfinder: HUBER, Adalbert, 64625 Bensheim (DE)
(86) Internationale Anmeldenummer: PCT/EP2003/007796
(87) Internationale Veröffentlichungsnummer: WO 2004/003070

(56) Entgegenhaltungen:
- DE-A- 4 220 411
- US-A- 5 350 448
- US-A- 5 876 856

## Beschreibung

Die vorliegende Erfindung betrifft die Verwendung von hellen oder transparenten Halbleitermaterialien als Trocknungs- bzw. Härtungsadditiv von Lacksystemen und Druckfarben.

Viele Materialien werden heutzutage lackiert oder bedruckt. Dadurch wird es möglich Eigenschaften wie die Farbe und auch die Beständigkeit von Materialien zu verbessern. Nachteilig sind die zum Teil langen Trocknungszeiten bzw. die hohe Temperatur bei der Trocknung. Bei der Automobillackierung werden relativ hohe lange Trockenstraßen benötigt um ein Abtrocknen des Lackes vor Applikation der nächsten Lackschicht zu gewährleisten. Ließe sich die Trocknungszeit verkürzen, so könnte der Energiebedarf und die Länge dieser Trocknungsstraßen verringert werden, was mit deutlich niedrigeren Produktionskosten verbunden wäre.

Aufgabe der vorliegenden Erfindung ist es daher ein Verfahren zur Härtungsbeschleunigung von Lacken und Druckfarben zu finden, das gleichzeitig auf einfache Art und Weise durchgeführt werden kann. Die Härtungsbeschleuniger sollten sich dabei leicht in das Lacksystem bzw. in die Druckfarbe einarbeiten lassen, eine hohe Transparenz aufweisen und nur in geringen Konzentrationen eingesetzt werden.

Überraschenderweise wurde nun gefunden, dass man die Aushärtung und/oder Trocknung von Lackschichten und Druckfarben dadurch beschleunigen kann, indem man dem Lack bzw. der Druckfarbe in geringen Mengen feinteilige helle oder transparente Halbleitermaterialien zusetzt. Durch die Zugabe dieses Härtungsbeschleunigers werden die Eigenschaften des Lackes und der Druckfarbe gar nicht bzw. nur unwesentlich beeinflusst.

Weiterhin beeinflusst der Härtungsbeschleuniger die Wärmeleitfähigkeit im Lack oder in den Druckfarben. Untersuchungen haben gezeigt, dass die Verteilung der Wärme im Lack bzw. in der Druckfarbe deutlich verbessert wird.

Der Einsatz von elektrisch leitenden Füllstoffen, dotierten Zinkoxid-Partikeln und elektrisch leitfähigen Pigmenten in Applikationssystemen ist beispielsweise aus der Offenlegungsschrift DE 42 20 411 A und den Patentschriften U.S. 5,876,856 und U.S. 5,350,448 bekannt. Die Verwendung von Halbleitermaterialien definierter Teilchenform zur Aushärtung und/oder Trocknung von Lacksystemen und Druckfarben ist nicht im Stand der Technik beschrieben.

Gegenstand der Erfindung ist die Verwendung von partikulären Halbleitermaterialien bzw. mit hellen oder transparenten Halbleitermaterialien beschichtete partikuläre Substrate zur Härtung und/oder Trocknung von Lacken und Druckfarben gemäß Anspruch 1.

Geeignete helle oder transparente Halbleitermaterialien sind vorzugsweise solche, die im IR-Bereich absorbieren. Bei den partikulären Halbleitermaterialien handelt es sich vorzugsweise um kugelförmige, oder plättchenförmige Partikel oder um mit Halbleitermaterialien beschichtete plättchenförmige, kugelförmig oder nadelförmige Substrate.

Die Halbleitermaterialien sind homogen aus hellen oder transparenten Halbleitermaterialien aufgebaut oder als Beschichtung auf ein partikuläres Substrat aufgebracht. Die Halbleitermaterialien basieren vorzugsweise auf Oxiden und/oder Sulfiden, wie z.B. indiumoxid, Antimonoxid, Zinnoxid, Zinkoxid, Zinksulfid, Zinnsulfid oder deren Gemische.

Geeignete Halbleitermaterialien besitzen in der Regel Partikelgrößen von 0,01 bis 2000 µm, vorzugsweise von 0,1 bis 100 µm, insbesondere von 0,5 bis 30 µm.

Die Halbleitermaterialien bestehen entweder homogen aus den genannten Halbleitern oder es handelt sich um partikuläre, vorzugsweise kugelförmige, nadelförmige oder plättchenförmige, Substrate, die mit den genannten Halbleitermaterialien ein oder mehrfach beschichtet sind. Vorzugsweise werden die Substrate nur mit einer Schicht belegt.

Die Substrate können kugelförmig (sphärisch), plättchenförmig oder nadelförmig sein. Die Form der Partikel ist an sich nicht kritisch. In der Regel haben die Teilchen einen Durchmesser von 0,01 - 2000 µm, besonders von 5 - 300 µm und insbesondere von 5 - 60 µm. Bei den besonders bevorzugten Substraten handelt es sich um kugelförmige und plättchenförmige Substrate. Geeignete plättchenförmige Substrate haben eine Dicke zwischen 0,02 und 5 µm, insbesondere zwischen 0,1 und 4,5 µm. Die Ausdehnung in den beiden anderen Bereichen liegt in der Regel zwischen 0,1 und 1000 µm, vorzugsweise zwischen 1 und 500 µm, und insbesondere zwischen 1 und 60 µm.

Bei den Substraten handelt es sich vorzugsweise um natürliche oder synthetische Glimmerplättchen, SiO₂-Plättchen, Al₂O₃-Plättchen, Glasplättchen, Aluminiumplättchen, BiOCI-Plättchen, SiO₂-Kugeln, Glaskugeln, Glashohlkugeln, TiO₂-Kugeln, Polymerkugeln, z.B. aus Polystyrol oder Polyamid, oder TiO₂-Nadeln oder um Gemische der genannten Substrate.

Die Beschichtung der partikulären Substrate mit den Halbleitermaterialien ist entweder bekannt oder kann nach dem Fachmann bekannten Verfahren erfolgen. Vorzugsweise werden die Substrate durch Hydrolyse der entsprechenden Metallsalze, wie z.B. Metallchloride oder Metallsulfate, Metallalkoholate oder Carbonsäuresalze in wässriger oder konventioneller Lösemittellösung beschichtet.

Bei den homogen aufgebauten Halbleitern als auch bei den mit ein oder mehreren Halbleitermaterialien beschichteten Substraten ist das Halbleitermaterial vorzugsweise mikrokristallin aufgebaut.

Besonders bevorzugte Trocknungs- und/oder Härtungsbeschleuniger sind plättchenförmiges oder kugelförmiges Zinnoxid, Antimonoxid, Indium-Zinn-Oxid (ITO) sowie Glimmerplättchen beschichtet mit ITO, Zinnoxid oder Antimonoxid sowie Gemische der genannten Oxide.

Besonders bevorzugte Trocknungs- und/oder Härtungsbeschleuniger sind transparente oder helle Halbleitermaterialien mit einem Pulverwiderstand von < 20 Ω · m, vorzugsweise von < 5 Ω · m.

Ein besonders bevorzugter Härtungsbeschleuniger ist ein mit Antimonoxid dotiertes Zinnoxid oder ein damit beschichtetes Substrat, wie z.B. ein Glimmerplättchen. Weiterhin bevorzugt sind kugelförmige SiO₂-Partikel beschichtet mit Antimonoxid dotiertem Zinnoxid.

Neben Antimon, vorzugsweise Antimonoxid, sind die Elemente der 3., 5. und 7. Hauptgruppe als Dotierstoff geeignet, vorzugsweise die Halogenide, insbesondere Chloride und Fluoride.

Die Dotierung ist abhängig vom eingesetzten Halbleitermaterial und beträgt in der Regel 0,01 - 30 Gew. % , vorzugsweise 2 - 25 Gew. %, insbesondere 5 - 16 Gew. % bezogen auf das Halbleitermaterial.

Weiterhin können auch Gemische von Härtungsbeschleunigem eingesetzt werden, wobei dem Mischungsverhältnis keine Grenzen gesetzt sind.

Bevorzugte Gemische sind indium-Zinn-Oxide mit Antimon dotierten Zinnoxiden und Indium-Zinn-Oxid mit dotierten Zinkoxiden.

Dem Lacksystem bzw. der Druckfarbe können auch Gemische aus zwei, drei oder mehr Halbleitermaterialien zugesetzt werden. Die Gesamtkonzentration ist abhängig von der Lack- bzw. Druckfarbenzusammensetzung, sollte aber nicht mehr als 35 Gew. % im Anwendungssystem betragen.

Der bzw. die Härtungs- und/oder Trocknungsbeschleuniger werden dem Lacksystem bzw. der Druckfarbe in Mengen von 0,01 - 30 Gew. %, insbesondere von 0,1 - 5 Gew. %, besonders bevorzugt in Mengen von 0,5 - 4 Gew.% zugesetzt.

Der Härtungsbeschleuniger wird vor der Applikation auf einen Gegenstand in den Lack bzw. die Druckfarbe eingerührt. Dies erfolgt vorzugsweise unter Verwendung eines Hochgeschwindigkeitsrührers oder im Falle schwer dispergierbarer, mechanisch unempfindlicher Härtungsbeschleuniger durch Verwendung z.B. einer Perlmühle bzw. einer Schüttelmaschine. Auch andere dem Fachmann bekannte Dispergieraggregate sind möglich. Zuletzt wird der Lack oder die Druckfarbe an der Luft physikalisch abgetrocknet oder durch Oxidation, Kondensation, thermisch, bevorzugt unter Anwendung von IR-Bestrahlung, ausgehärtet.

Durch den Härtungs- und/oder Trocknungsbeschleuniger werden die Härtungs- und/oder Trocknungszeiten der Lackschicht bzw. der Druckfarbe in der Regel auf ca. 10-60 % der ursprünglichen Trocknungszeit verkürzt. Insbesondere bei Druckfarben und Lacksystemen, die mittels IR-Strahlung aushärten bzw. trocknen, werden deutlich verkürzte Trocknungszeiten beobachtet.

Überraschenderweise wurde weiterhin gefunden, dass sich die Beschleunigung der Aushärtung auch auf darüberliegende Lackschichten stark positiv auswirkt. Weiterhin wird die Wärmeleitfähigkeit innerhalb der Lackschichten verbessert.

Zu den geeigneten Lacksystemen zählen insbesondere thermisch härtende Lacke auf Lösemittel- oder Wasserbasis, IR-Lacke, Pulverlacke, Schmelzlacke, aber auch Folienapplikation und Kunststoffschweißen, sowie Lösemittel-haltige oder wässrige Druckfarben für alle gängigen Druckarten, wie z.B. den Tiefdruck, Flexodruck, Buchdruck, Textildruck, Offset-Druck. Siebdruck, Sicherheitsdruck. Die Lacke bzw. Druckfarben können sowohl weiß, farbig als auch transparent sein.

Die folgenden Beispiele sollen die Erfindung näher erläutern, ohne sie jedoch zu begrenzen.

### Beispiele

### Beispiel 1a (Vergleich)

In einen physikalisch trocknenden handelsüblichen Polyester/Acrylat-KlarLack werden 10 Gew.% TiO₂ Kronos 2310 (TiO₂-Pigment der Teilchengröße von ca. 300 nm) berechnet auf die Lackformulierung durch Dispergieren mit Zirkoniumdioxid-Kugeln (Durchmesser 3 mm) eingearbeitet. Die Dispergierung erfolgt in einem Dispermat bei einer Umfangsgeschwindigkeit von 12,6 m/s, 1 Stunde bei 20 °C.

### Beispiel 1b

Analog Beispiel 1a werden in einen physikalisch trocknenden Polyester/Acrylat-Lack 8 Gew. % TiO₂ Kronos 2310 und 2 Gew.% Trocknungsadditiv (ein mit Antimonoxid dotiertes Zinndioxid der Teilchengröße von ca. 1 µm) berechnet auf die Lackformulierung durch Dispergieren mit Zirkoniumdioxid-Kugeln eingearbeitet.

### Beispiel 1c: Meßergebnisse

Lackproben aus Beispiel 1a und 1b werden auf Q-Panels bei einer Schichtdicke von 200 µm nass aufgerakelt. Die Trockenschichtdicke beträgt 25 ± 2 µm.

Die lackierten Proben aus Beispiel 1a und Beispiel 1b werden 5 min abgedunstet und einer Bestrahlung mit IR-Radiatoren von der Gesamtleistung 3 kW aus der Entfernung 50 cm ausgesetzt. Die Bestrahlungsdauer wird dabei zwischen 5, 10 und 15 min variiert. Die Kontrolle der Trocknung/Aushärtung erfolgt unter Einsatz eines Mikrohärtegerätes Fischerscope bei Raumtemperatur unmittelbar nach der IR-Bestrahlung unter Anwendung eines Diamantindentors und einer Endlastkraft von 3 mN. Jede Messung wird dreimal durchgeführt und der Mittelwert aus den einzelnen Meßergebnissen gebildet.

Die Messergebnisse der Mikrohärtungen nach unterschiedlicher Dauer der IR-Bestrahlung der Lackproben sind numerisch in Tabelle 1 angegeben.

**Tabelle 1:**

| IR-Bestrahlungsdauer min | Mikrohärte/Lack ohne Additiv N/mm² | Mikrohärte/Lack mit Additiv N/mm² |
|---|---|---|
| 5 | 24,0 ± 1,2 | 34,0 ± 5,8 |
| 10 | 31,6 ± 1,6 | 37,0 ± 2,6 |
| 15 | 32,2 ± 0,6 | 37,2 ± 2,4 |

Aus den Mikrohärtemessungen ist eindeutlich ersichtlich, dass die Zugabe des Trocknungsadditivs die Trocknung/Aushärtung des physikalisch trocknenden Lackes beschleunigt. Bereits nach 5 Minuten IR-Bestrahlung der Lackprobe mit dem Trocknungsadditiv ist der Härtewert größer als der für die Lackprobe ohne Additiv nach 15 Minuten IR-Bestrahlung. Durch die Zugabe des Trocknungsadditivs wird sowohl die Zeitdauer zum staubtrockenen Zustand deutlich verkürzt als auch die vollständige Aushärtung des physikalisch trocknenden Lacks verbessert.

## Patentansprüche

1. Verwendung von hellen oder transparenten plättchen- oder kugelförmigen Halbleitermaterialien bzw. mit hellen oder transparenten Halbleitermaterialien beschichtete kugelförmige, nadelförmige oder plättchenförmige Substrate in Mengen von 0,01-30 Gew.% zur Aushärtung und/oder Trocknung von Lackschichten und Druckfarben.

2. Verwendung von Halbleitermaterialien nach Anspruch 1, **dadurch gekennzeichnet, dass** das Halbleitermaterial oxidisch oder sulfidisch aufgebaut ist.

3. Verwendung von Halbleitermaterialien nach Anspruch 1 oder 2, **dadurch gekennzeichnet, dass** das Halbleitermaterial auf Basis von Indiumoxid, Antimonoxid, Zinnoxid, Zinkoxid, Zinksulfid, Zinnsulfid aufgebaut ist oder ein Gemisch der genannten Materialien ist.

4. Verwendung von Halbleitermaterialien nach Anspruch 3, **dadurch gekennzeichnet, dass** das Gemisch Indium-Zinn-Oxid (ITO) ist.

5. Verwendung von Halbleitermaterialien nach einem oder mehreren der Ansprüche 1 bis 4, **dadurch gekennzeichnet, dass** das Substrat ausgewählt ist aus der Gruppe der Glimmerplättchen, SiO₂-Plättchen, Al₂O₃-Plättchen, Glasplättchen, Aluminiumplättchen, BiOCI-Plättchen, SiO₂-Kugeln, Glaskugeln, Glashohlkugeln, TiO₂-Kugeln, Polymerkugeln, TiO₂-Nadeln oder deren Gemische.

6. Verwendung von Halbleitermaterialien nach einem oder mehreren der Ansprüche 1 bis 5, **dadurch gekennzeichnet, dass** die Halbleitermaterialien dotiert sind.

7. Verwendung von Halbleitermaterialien nach einem oder mehreren der Ansprüche 1 bis 6, **dadurch gekennzeichnet, dass** das Halbleitermaterial amorph, kristallin oder mikrokristallin aufgebaut ist.

## Claims

1. Use of pale or transparent flake-form or bead-form semiconductor materials or bead-form, needle-shaped or flake-form substrates coated with pale or transparent semiconductor materials in amounts of 0.01-30% by weight for the curing and/or drying of surface-coating films and printing inks.

2. Use of semiconductor materials according to Claim 1, **characterised in that** the semiconductor material has an oxidic or sulfidic structure.

3. Use of semiconductor materials according to Claim 1 or 2, **characterised in that** the semiconductor material is built up on the basis of indium oxide, antimony oxide, tin oxide, zinc oxide, zinc sulfide, tin sulfide or is a mixture of the said materials.

4. Use of semiconductor materials according to Claim 3, **characterised in that** the mixture is indium tin oxide (ITO).

5. Use of semiconductor materials according to one or more of Claims 1 to 4, **characterised in that** the substrate is selected from the group of mica flakes, SiO₂ flakes, Al₂O₃ flakes, glass flakes, aluminium flakes, BiOCl flakes, SiO₂ beads, glass beads, hollow glass beads, TiO₂ beads, polymer beads, TiO₂ needles or mixtures thereof.

6. Use of semiconductor materials according to one or more of Claims 1 to 5, **characterised in that** the semiconductor materials are doped.

7. Use of semiconductor materials according to one or more of Claims 1 to 6, **characterised in that** the semiconductor material has an amorphous, crystalline or microcrystalline structure.

## Revendications

1. Utilisation de matériaux à semi-conducteurs sous forme de paillettes ou sous forme de billes pâles ou transparents ou de substrats sous forme de billes, sous forme d'aiguilles ou sous forme de paillettes revêtus de matériaux à semi-conducteurs pâles ou transparents en des quantités de 0,01-30% en poids pour le durcissement et/ou le séchage de films de revêtement de surface et d'encres d'impression.

2. Utilisation de matériaux à semi-conducteurs selon la revendication 1, **caractérisée en ce que** le matériau à semi-conducteurs possède une structure oxydique ou sulfidique.

3. Utilisation de matériaux à semi-conducteurs selon la revendication 1 ou 2, **caractérisée en ce que** le matériau à semi-conducteurs est bâti à base d'oxyde d'indium, d'oxyde d'antimoine, d'oxyde d'étain, d'oxyde de zinc, de sulfure de zinc, de sulfure d'étain ou est un mélange desdits matériaux.

4. Utilisation de matériaux à semi-conducteurs selon la revendication 3, **caractérisée en ce que** le mélange est de l'oxyde d'indium-étain (ITO).

5. Utilisation de matériaux à semi-conducteurs selon l'une ou plusieurs des revendications 1 à 4, **caractérisée en ce que** le substrat est choisi parmi le groupe constitué par les paillettes de mica, les paillettes de SiO₂, les paillettes de Al₂O₃, les paillettes de verre, les paillettes d'aluminium, les paillettes de BiOCl, les billes de SiO₂, les billes de verre, les billes de verre creux, les billes de TiO₂, les billes de polymère, les aiguilles de TiO₂ ou des mélanges de celles-ci.

6. Utilisation de matériaux à semi-conducteurs selon l'une ou plusieurs des revendications 1 à 5, **caractérisée en ce que** les matériaux à semi-conducteurs sont dopés.

7. Utilisation de matériaux à semi-conducteurs selon l'une ou plusieurs des revendications 1 à 6, **caractérisée en ce que** le matériau à semi-conducteurs possède une structure amorphe, cristalline ou microcristalline.
